# EUROPÄISCHE PATENTANMELDUNG

(11) **EP 3 064 561 A1**
(43) Veröffentlichungstag der Anmeldung: **07.09.2016**
(21) Anmeldenummer: 15157536.2
(22) Anmeldetag: 04.03.2015
(51) Int. Cl.: C09J 123/14, C09J 123/22, B32B 7/12, B32B 13/12, B32B 27/32

(54) **SCHMELZKLEBSTOFF MIT VERBESSERTER UV-STABILITÄT UND VERWENDUNG ZUR HERSTELLUNG EINER MEHRSCHICHTIGEN KUNSTSTOFFBAHN**

(71) Anmelder: Sika Technology AG, 6340 Baar (CH)
(72) Erfinder: Janke, Doreen, 25486 Alveslohe (DE); Cordes, Mathias, 22525 Hamburg (DE); Funke, Björn, 21339 Lüneburg (DE)
(74) Vertreter: Sika Patent Attorneys

(57) **Zusammenfassung**

Die erfindungsgemäße Schmelzklebstoff-Zusammensetzung umfasst mindestens ein bei 25 °C festes Polyolefin-Polymer **P,** welches bevorzugt ein thermoplastisches Poly-α-Olefin und besonders bevorzugt ein ataktisches Poly-α-Olefin (APAO) ist, mindestens ein bei 25 °C flüssiges Polyolefin-Harz **PH,** bevorzugt auf Basis von Polyisobutylen, und gegebenenfalls mindestens ein Polyolefin-Wachs **PW,** welches bevorzugt ein Maleinsäureanhydrid-gepfropftes Polyolefin-Wachs und besonders bevorzugt ein Maleinsäureanhydrid-gepfropftes Polypropylen- oder Polyethylen-Wachs ist.

Die erfindungsgemäße Schmelzklebstoff-Zusammensetzung zeichnet sich neben einer hohen Eigenklebrigkeit und einer guten Haftung gegenüber niederenergetischen Oberflächen durch eine vorteilhaft hohe UV-Beständigkeit aus.

## Beschreibung

### Technisches Gebiet

Die Erfindung betrifft das Gebiet der Schmelzklebstoffe sowie die Verwendung der erfindungsgemäßen Schmelzklebstoff-Zusammensetzung zur Herstellung einer mehrschichtigen Kunststoffbahn. Ferner stellt die vorliegende Erfindung einen Verbundkörper bereit, der die Heissschmelzklebstoff-Zusammensetzung enthält.

### Stand der Technik

Schmelzklebstoffe sind seit langem bekannt und werden als Kaschier- und Montageklebstoffe eingesetzt. Zur Abdichtung von Untergründen gegen Wasserdurchstoss sind in der Baubranche wasserdichte Membranen bekannt.

Beispielsweise beschreibt die WO 2010/ 043 661 A1 eine wasserdichte Membran zur Abdichtung von Untergründen, die eine Schottschicht und eine an einer Seite der Schottschicht angeordnete Verbundschicht umfasst. Die Membran weist zudem ein Dichtmittel auf, das diskontinuierlich zwischen Verbundschicht und Schottschicht angeordnet ist.

Aus der WO 2014/ 029 763 A1 sind wasserdichte Membranen zur Abdichtung von Untergründen bekannt, die eine Schottschicht und eine Funktionsschicht aufweisen. Die Funktionsschicht dieser wasserdichten Membran enthält ein Haftmittel und ein thermoplastisches Polymer, dessen Konsistenz sich bei Kontakt mit einem stark alkalischen Medium ändert. Das thermoplastische Polymer gewährleistet somit, dass die Funktionsschicht einer Verarbeitung durch Angiessen von flüssigem Beton nicht klebrig ist, aber bei Kontakt mit Beton klebrig wird, so dass sich ein fester Verbund mit dem angegossenen Beton ausbilden kann.

Häufig weisen wasserdichte Membranen zur Abdichtung von Gebäuden gegen Wassereintritt eine Beschichtung mit einem Schmelzklebstoff auf, der als Kaschierklebstoff den Verbund einer Schottschicht mit einer Funktionsschicht, wie einem Vlies, in das flüssiger Beton eindringen kann, oder direkt mit dem aufgetragenen Beton, gewährleistet. Solche Schmelzklebstoffe müssen ein spezifisches Eigenschaftsprofil aufweisen. Um einen optimalen Schutz des Betons vor Feuchtigkeit und Wasser aus dem Untergrund auch nach einer eventuellen Beschädigung der wasserdichten Membran zu gewährleisten (Hinterlaufsicherheit), muss der Schmelzklebstoff im erkalteten Zustand eine hohe Haftfestigkeit zur Schottschicht und zur Funktionsschicht aufweisen. Da die Schottschicht meist aus Materialien mit geringer Oberflächenenergie besteht, muss der Klebstoff auf Materialien wie Polyolefinen, insbesondere Polyethylen oder Ethylenvinylacetat-Copolymeren, einen guten Haftungsaufbau zeigen.

Der Klebstoff sollte außerdem auch nach dem Aushärten eine ausreichende Eigenklebrigkeit aufweisen und möglichst weich sein. Da der Klebstoff mit flüssigem Beton in Kontakt kommt, sollte er zudem eine hohe Hydrolyse-Stabilität zeigen. Schließlich sollte der Schmelzklebstoff über eine hinlängliche Anfangsklebrigkeit vor dem Aushärten verfügen, damit bei der industriellen Fertigung von wasserdichten Membranen aus einer Schottschicht und einer Funktionsschicht die beiden Schichten verbunden werden können.

Mit diesem Problem befasst sich die WO 2011/ 023 768 A1, die Schmelzklebstoffe auf Basis von bei 25 °C festen Polyolefinen, Weichharzen mit einem Erweichungspunkt zwischen -10 °C und 40 °C und polar modifizierten Polyolefin-Wachsen beschreibt. Diese Schmelzklebstoffe zeigen gute Haftungs- und Frühfestigkeitseigenschaften auf Polyolefin-Substraten.

Um hierbei die Hinterlaufsicherheit gewährleisten zu können, ist ein tiefes Einpenetrieren des Schmelzklebstoffs vor seiner Aushärtung in die Funktionsschicht erforderlich. Idealerweise penetriert der Beton, nach Applikation auf die Funktionsschicht, bis auf den Schmelzklebstoff durch und bindet so am Schmelzklebstoff an, wodurch eine hohe Hinterlaufsicherheit gegeben ist.

Die bisher aus dem Stand der Technik bekannten Schmelzklebstoff-Zusammensetzungen zur Verwendung von Substraten mit geringer Oberflächenenergie weisen allerdings den Nachteil einer nur unzureichenden UV-Beständigkeit auf. Dies stellt insbesondere bei größeren Bauprojekten oder Bauprojekten in Staaten, in denen die Membranen intensivem Sonnenlicht ausgesetzt werden, ein großes Problem dar, da die mit dem Schmelzklebstoff beschichteten Membranen mittunter bis zu einige Wochen gegenüber dem Tageslicht exponiert werden. Das UV-Licht führt zu einer Versprödung des Klebstoffs, was zu einer Ablösung von auf einer Schottschicht aufgebrachten Vliesschichten führt. Dies hat wiederum zur Folge, dass sich unter die Schottschicht eindringendes Wasser, abhängig vom Ausmaß der Ablösung, großflächig verteilen kann, so dass sich eine undichte Stelle in der Membran nur noch schwer lokalisieren lässt. Damit weisen die bekannten Membranen keine ausreichende Hinterlaufsicherheit auf.

### Darstellung der Erfindung

Aufgabe der vorliegenden Erfindung ist es daher, Schmelzklebstoff-Zusammensetzungen zur Verfügung zu stellen, die ein möglichst breites Haftungsspektrum aufweisen, auf niederenergetischen Oberflächen gut haften und sich zudem durch eine hohe UV-Stabilität auszeichnen.

Überraschenderweise hat sich gezeigt, dass eine Schmelzklebstoff-Zusammensetzung gemäss Anspruch 1 in der Lage ist, dieses Problem zu lösen. Die Schmelzklebstoff-Zusammensetzungen gemäß der vorliegenden Erfindung verfügen über ein breites Haftspektrum, zeichnen sich durch eine hohe Haftfestigkeit gegenüber Folien mit niedriger Oberflächenenergie wie Polyolefin-Folien, insbesondere Polyethylen-Folien, aus und zeigen eine sehr gute UV-Beständigkeit über längere Zeiträume.

Ferner ist die erfindungsgemäße Schmelzklebstoff-Zusammensetzung lagerstabil und unter den üblichen Applikationsbedingungen, insbesondere im Temperaturbereich von 150 bis 200 °C, gut verarbeitbar und während einer ausreichend langen Zeit viskositätsstabil. Die Schmelzklebstoff-Zusammensetzung weist darüber hinaus eine geeignete Eigenklebrigkeit sowie eine gute Beständigkeit gegenüber Umwelteinflüssen allgemein auf.

Weiter sind die Schmelzklebstoff-Zusammensetzungen aus arbeitshygienischen und -sicherheitsbedingten Aspekten sehr vorteilhaft.

Weitere Aspekte der vorliegenden Erfindung betreffen die Verwendung der Schmelzklebstoff-Zusammensetzung zur Herstellung von mehrschichtigen Kunststoffbahnen und zum Verkleben von Polyolefin-Materialien mit Schäumen, Faserwerkstoffen oder Folien.

Ferner betrifft die vorliegende Erfindung einen Verbundkörper gemäss Anspruch 13.

Bevorzugte Ausführungsformen der Erfindung sind Gegenstand der Unteransprüche.

### Wege zur Ausführung der Erfindung

In einem ersten Aspekt betrifft die vorliegende Erfindung eine Schmelzklebstoff-Zusammensetzung, welche
a) mindestens ein bei 25 °C festes Polyolefin-Polymer **P**;
b) mindestens ein bei 25 °C flüssiges Polyolefin-Harz **PH**, bevorzugt Polyisobutylen, und gegebenenfalls
c) mindestens ein Polyolefin-Wachs **PW**,
umfasst.

Als "Erweichungspunkt" wird im vorliegenden Dokument jeweils der Erweichungspunkt, welcher nach der Ring & Kugel-Methode gemäss DIN EN 1238 gemessen wurde, verstanden.

Als "Raumtemperatur" wird im vorliegenden Dokument eine Temperatur von 25 °C bezeichnet.

Die fett markierten Bezeichnungen wie **P**, **PH**, **PW**, **S1**, **S2** und dergleichen dienen im vorliegenden Dokument lediglich dem besseren Leseverständnis und der Identifizierung.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter einem "α-Olefin" wird in diesem Dokument in üblicher Definition ein Alken der Summenformel CₓH₂ₓ (x entspricht der Anzahl Kohlenstoffatome) verstanden, welches eine C-C-Doppelbindung am ersten Kohlenstoffatom (α-Kohlenstoff) aufweist. Beispiele für α-Olefine sind Ethylen, Propylen, 1-Buten, 1-Penten, 1-Hexen, 1-Hepten und 1-Octen, während 1,3-Butadien, 2-Buten oder Styrol keine α-Olefine im Sinne dieses Dokumentes darstellen.

Bei dem Polyolefin-Polymer **P** in der erfindungsgemäßen Zusammensetzung handelt es sich zweckmäßig um ein thermoplastisches Polyolefin, insbesondere um ein thermoplastisches Poly-α-olefin, und bevorzugt um ein ataktisches Poly-α-olefin (APAO) und besonders bevorzugt um ein Propen-reiches Poly-α-olefin. Ataktischen Poly-α-olefine lassen sich durch Polymerisation von α-Olefinen, insbesondere von Ethen, Propen und 1-Buten, beispielsweise mit Ziegler-Natta-Katalysatoren herstellen und weisen gegenüber anderen Polyolefinen eine amorphe Struktur auf. Bei diesen Poly-α-olefinen kann es sich um Homopolymere oder Copolymere handeln.

Durch die Angabe "mindestens bei 25 °C festes Polyolefin-Polymer **P"** sind auch Gemische von mehreren bei 25 °C festen Polyolefin-Polymeren erfasst, wobei es sich um Mischungen von Polyolefin-Polymeren des gleichen Polymertyps (d.h. z.B. verschiedene Polypropylene), oder von unterschiedlichen Polymertypen handeln kann. Bevorzugt Gemische von bei 25 °C festen Polyolefin-Polymeren **P** umfassen Mischungen verschiedener ataktischer Poly-α-olefine und Mischungen von einem ataktischen Poly-α-olefin mit Polypropylen und/oder Polyethylen.

Ein im Rahmen der vorliegenden Erfindung besonders bevorzugtes Polyolefin-Polymer **P** ist ein nach dem Ziegler-Natta-Verfahren hergestelltes Propen-reiches ataktischen Poly-α-olefin, wie es z. B. unter dem Handelsnamen Vestoplast® 751 von Evonik erhältlich ist.

Bevorzugt weist das Polyolefin-Polymer **P** einen Erweichungspunkt, gemessen nach der Ring & Kugel-Methode gemäss DIN EN 1238, zwischen 70 °C und 170 °C, bevorzugt zwischen 80 °C und 120 °C, besonders bevorzugt zwischen 90 °C und 110 °C, auf.

Weiterhin ist es bevorzugt, wenn das Molekulargewicht Mₙ des Polyolefin-Polymers **P** zwischen 7000 und 25000 g/mol liegt.

Unter "Molekulargewicht" versteht man im vorliegenden Dokument stets das zahlenmittlere Molekulargewichts Mₙ, das mit Hilfe der Gaspermeationschromatopraphie (GPC) und geeigneten Polystyrolstandards in Anlehnung an die DIN 55672 bestimmt werden kann.

In Bezug auf den Anteil des Polyolefin-Polymers **P** in der erfindungsgemäßen Schmelzklebstoff-Zusammensetzung unterliegt die vorliegende Erfindung keinen wesentlichen Beschränkungen. Als günstiger Anteil hat sich in der vorliegenden Erfindung aber eine Menge des mindestens einen bei 25 °C festen Polyolefin-Polymers **P** im Bereich von 10 bis 60 Gew.-%, bevorzugt von 30 bis 55 Gew.-% und besonders bevorzugt von 40 bis 50 Gew.-%, bezogen auf das Gesamtgewicht der Schmelzklebstoff-Zusammensetzung, herausgestellt.

Die Schmelzklebstoff-Zusammensetzung enthält weiterhin mindestens ein bei 25 °C flüssiges Polyolefin-Harz **PH.** Unter "Polyolefin-Harzen" werden im Rahmen der vorliegenden Erfindung Polyolefin-Materialien verstanden, die bei 25 °C klebrig und nicht-kristallin sind und die Polymere von Monomeren der allgemeinen Struktur CH₂=CR₁R₂ bilden, in denen R₁ einen Alkylrest darstellt und R₂ entweder ebenfalls einen Alkylrest darstellt, der von R₁ verschieden sein kann, oder ein Wasserstoffatom ist. Geeignete Polyolefin-Harze zur Verwendung in den erfindungsgemäßen Schmelzklebstoff-Zusammensetzungen sind damit vor allem ataktische Polypropylene oder Polyisobutylene, wobei Polyisobutylene als bevorzugt gelten. Für die verwendbaren Polyisobutylene ist es unwesentlich, ob diese einen Anteil an terminalen Doppelbindungen aufweisen oder ob solche Doppelbindungen durch Umsetzung mit Wasserstoff aus dem Polymer entfernt wurden.

Das Polyolefin-Harz weist, soweit bestimmbar, vorzugsweise einen Erweichungspunkt (bestimmt nach der Ring & Kugel-Methode gemäß DIN EN 1238) von weniger als -10°C auf.

Das Polyolefin-Harz weist zudem bevorzugt ein zahlenmittleres Molekulargewicht Mₙ im Bereich 250 bis 5000 g/mol und insbesondere im Bereich von 500 bis 2500 g/mol auf. Geeignete Polyolefin-Harze weisen zudem zweckmäßig einen "pour point" (bestimmt gemäß DIN 51597) im Bereich von -10 bis +10°C und insbesondere von -10 bis +5°C auf. Solche Polyolefin-Harze sind z. B. unter den Handelsnamen Glissopal V230, V500 oder V700 von der Firma BASF, Dynapak Poly 230 von der Firma Univar GmbH (Essen, Deutschland), DAELIM PB 950 von der Firma Daelim Industrial Co., Ltd, oder als Indopol H100 von der Firma Ineos erhältlich.

Auch in Bezug auf die Menge des mindestens einen Polyolefin-Harzes **PH** unterliegt die vorliegende Erfindung keinen substanziellen Beschränkungen. Im Rahmen der durchgeführten Untersuchungen hat sich jedoch gezeigt, dass ein Unterschreiten eines Gehalts von 30 Gew.-% zu einer nur noch geringen Eigenklebrigkeit der Schmelzklebstoff-Zusammensetzung führt. Bevorzugt beträgt daher der Gehalt des mindestens einen Polyolefin-Harzes **PH** mindestens 30 Gew.-%, wobei als besonders günstige Gehaltsbereiche 30 bis 60 Gew.-% und insbesondere 40 bis 50 Gew.-%, bezogen auf das Gesamtgewicht der Schmelzklebstoff-Zusammensetzung, angegeben werden können.

Die Schmelzklebstoff-Zusammensetzung enthält gegebenenfalls weiterhin mindestens ein Polyolefin-Wachs **PW**. Unter einem "Polyolefin-Wachs" versteht man, im Gegensatz zu einem Polyolefin-Harz, ein Material aus einem Polyolefin, das bei Temperaturen von weniger als 40 °C fest ist, und im festen Zustand eine teilkristalline Struktur aufweist. Zudem sei für die Definition von Wachsen auf das Römpp Chemie Lexikon, 10. Auflage, 1999 verwiesen, in dem weitere Eigenschaften von Wachsen angegeben werden. Polyolefin-Wachse weisen diese Eigenschaften auf und bestehen in der Basis aus Polyolefinen, die allerdings mit anderen Monomeren funktionalisiert sein können.

Im Rahmen der vorliegenden Erfindung geeignete Polyolefin-Wachse **PW** sind zum Beispiel durch Aufpfropfung von polaren Olefin-Monomeren, beispielsweise α,β-ungesättigten Carbonsäuren und/ oder deren Derivaten, wie (Meth-)acrylsäure oder Maleinsäureanhydrid, und/ oder substituierte und/ oder unsubstituierte Styrole erhältlich.

Zudem können geeignete Polyolefin-Wachse **PW** durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Betracht, bei denen die Olefine, in der Regel Ethylen, bei hohen Drücken und Temperaturen zu mehr oder minder verzweigten Wachsen umgesetzt werden. Bei anderen Verfahren zur Herstellung geeigneter Polyolefin-Wachse werden Ethylen und/oder höhere α-Olefine mit Hilfe metallorganischer Katalysatoren, beispielsweise Ziegler-Natta- oder Metallocenkatalysatoren, zu unverzweigten oder verzweigten Wachsen polymerisiert.

Bevorzugt handelt es sich bei dem Polyolefin-Wachs **PW** um Homo- und Copolymere verschiedener Alkene, insbesondere um Homo- und Copolymere des Ethens und Propens.

Darüber hinaus handelt es sich bei dem Polyolefin-Wachs **PW** bevorzugt um Homo- und Copolymere, die mit Hilfe von Ziegler-Natta- oder Metallocen-Katalysatoren hergestellt werden.

Besonders bevorzugt handelt es sich in der erfindungsgemäßen Zusammensetzung bei dem mindestens einen Polyolefin-Wachs **PW** um ein Maleinsäureanhydrid-gepfropftes Polyolefin-Wachs und ganz besonders bevorzugt um ein Maleinsäureanhydrid-gepfropftes Polypropylen- oder Polyethylen-Wachs.

Der Pfropfungsgrad des Polyolefin-Wachs **PW** ist vorteilhaft über 1 Gew.-%, insbesondere über 3 Gew.-%, polarer Olefin-Monomere, insbesondere Maleinsäureanhydrid, bezogen auf das Gewicht des Polyolefin-Wachs **PW**. Vorzugsweise beträgt dieser Pfropfungsgrad zwischen 2 und 15 Gew.-%, bevorzugt zwischen 4 und 15 Gew.-% und besonders bevorzugt zwischen 6 und 12 Gew.-%.

Falls die erfindungsgemäßen Schmelzklebstoff-Zusammensetzung ein Polyolefin-Wachs **PW** enthält, sollte dieses mit einem Anteil von mindestens 0,5 Gew.-% in der Schmelzklebstoff-Zusammensetzung enthalten sein. Bevorzugt beträgt die Menge des mindestens einen Polyolefin-Wachses **PW** mehr als 1 Gew.-%, besonders bevorzugt 1 bis 20 Gew.-%, ganz besonders bevorzugt 3 bis 10 Gew.-% und am meisten bevorzugt etwa 5 Gew.-%, bezogen auf die Schmelzklebstoff-Zusammensetzung.

Das Polyolefin-Wachs **PW** weist vorzugsweise einen Erweichungspunkt zwischen 75 °C und 200 °C, insbesondere zwischen 120 °C und 170 °C, und/oder eine Schmelzviskosität bei 170 °C von 10 - 10 000 mPa•s, insbesondere von 750 - 5000 mPa•s, auf.

Über die im Vorstehenden erläuterten Bestandteile hinaus kann die erfindungsgemäße Schmelzklebstoff-Zusammensetzung mindestens ein thermoplastisches Polymer enthalten, das kein Polyolefin-Polymer ist. Bevorzugte thermoplastische Polymere sind beispielsweise Homo- und CoPolymeren von Monomeren wie Ethylen, Propylen, Butylen, Isobutylen, Isopren, Vinylacetat, Ester davon und (Meth)acrylat.

Besonders bevorzugte thermoplastische Polymere sind Homo- und CoPolymere wie Ethylenvinylacetat-Copolymere (EVA), insbesondere mit einem Vinylacetat-Gehalt im Bereich von 10 bis 35 Gew.-%, einem Schmelzindex (bestimmt gemäß ASTM D1238 bei 190°C und 2.16 kg) von 5 bis 1000 g/10Min und einem Schmelzpunkt im Bereich von 60 bis 100°C, sowie Polypropylene und Polyethylene in gepfropfter bzw. nicht gepfropfter Form. Besonders geeignte Ethylenvinylacetat-Copolymere sind unter den Handelsnamen Evathane^{®} 28-800 von Arkema oder Greenflex^{®} MP35 von Polimeri erhältlich.

Optional kann die erfindungsgemäße Schmelzklebstoff-Zusammensetzung auch ein oder mehrere Öle, die zweckmäßig auf Polyolefinen beruhen, enthalten, wobei ein solcher Zusatz aber weniger bevorzugt ist.
Optional kann die erfindungsgemäße Schmelzklebstoff-Zusammensetzung zudem einen Klebrigkeitverbesserer auf Basis eines Harzes enthalten, bei dem es sich nicht um ein Polyolefinharz handelt wie es vorstehend definiert wurde. Diesbezüglich in Betracht kommen insbesondere aliphatische und cycloaliphatische oder aromatische Kohlenwasserstoffharze, die durch Polymerisation bestimmter Harzölfraktionen hergestellt werden können, die bei der Aufbereitung von Erdöl anfallen. Derartige Harze, die z.B. durch Hydrierung oder Funktionalisierung modifiziert werden können, sind beispielsweise unter den Handelsnamen Wing Tack (Cray Valley), z. B. in Form von Wingtack 86, oder Escorez (ExxonMobil Chemical Company), z.B. in Form von Escorez 1401, erhältlich. Weiter kommen als Harze Polyterpen-Harze in Betracht, hergestellt durch Polymerisation von Terpenen, beispielsweise Pinen in Gegenwart von Friedel-Crafts-Katalysatoren, desgleichen hydrierte Polyterpene, Copolymere und Terpolymere von natürlichen Terpenen, beispielsweise Styrol/Terpen- oder α-Methylstyrol/Terpen-Copolymere. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate sowie phenol-modifizierte Pentaerithrolester von Harzen und phenol-modifizierte Terpen-Harze.

Im Rahmen der dieser Erfindung zugrundeliegenden Untersuchungen hat es sich gezeigt, dass Zusammensetzungen, die Weichharze mit einem Erweichungspunkt von -10 °C bis 40 °C (bestimmt nach der Ring & Kugel-Methode gemäß DIN EN 1238), und insbesondere Weichharze auf Basis von C₅-C₉-Kohlenwasserstoffen, enthalten, eine verminderte UV-Stabilität aufweisen. Im Rahmen der hier beschriebenen Erfindung ist es deshalb bevorzugt, wenn die Schmelzklebstoff-Zusammensetzungen ohne den Zusatz solcher Weichharze hergestellt werden, und demzufolge frei von solchen Weichharzen sind.

Die Schmelzklebstoff-Zusammensetzung kann andererseits weitere Additive aufweisen, die aus der Gruppe bestehend aus Füllstoffen, Weichmachern, Haftvermittlern, UV-Absorptionsmitteln, UV- und Wärmestabilisatoren, optischen Aufhellern, Pigmenten, Farbstoffen und Trocknungsmitteln, sowie Mischungen davon ausgewählt sind.

Es hat sich gezeigt, dass es besonders vorteilhaft ist, wenn die Gewichtssumme aller bei 25 °C festen Polyolefin-Polymere **P** und aller bei 25 °C flüssigen Polyolefin-Harze **PH** und aller Polyolefin-Wachse **PW** mehr als 60 Gew.-%, bevorzugt mehr als 80 Gew.-%, der Schmelzklebstoff-Zusammensetzung beträgt.

Als besonders vorteilhaft haben sich zudem Schmelzklebstoff-Zusammensetzungen erwiesen, welche im Wesentlichen aus bei 25 °C festen Polyolefin-Polymeren **P**, bei 25 °C flüssigen Polyolefin-Harzen **PH** und gegebenenfalls Polyolefin-Wachs **PW** bestehen, wobei die Verwendung von jeweils einem Polyolefin-Polymer **P**, einem Polyolefin-Harz **PH** und gegebenenfalls einem Polyolefin-Wachs **PW** aus prozessökonomischen Gründen bevorzugt ist. Der Begriff "im Wesentlichen bestehen aus" bedeutet, dass weniger als 5 Gew.-%, insbesondere weniger als 1 Gew.-%, Anteile an anderen Bestandteilen vorhanden sind.

Insbesondere bestehen die Schmelzklebstoff-Zusammensetzungen aus mindestens einem bei 25 °C festem Polyolefin-Polymer **P**, mindestens einem bei 25 °C flüssigem Polyolefin-Harz **PH** und gegebenenfalls mindestens einem Polyolefin-Wachs **PW**.

Grundsätzlich erfolgt die Herstellung auf übliche, dem Fachmann für Schmelzklebstoffe bekannte, Art und Weise.

Die Schmelzklebstoff-Zusammensetzungen werden durch Aufheizen verflüssigt, wobei die thermoplastischen Inhaltsstoffe aufschmelzen. Die Viskosität der Schmelzklebstoff-Zusammensetzungen sollte an die Applikationstemperatur angepasst sein. Typischerweise ist die Applikationstemperatur 150 bis 200 °C, insbesondere 155 bis 180 °C. Bei dieser Temperatur ist der Klebstoff gut verarbeitbar. Die Viskosität, bestimmt nach Brookfield Thermosel, beträgt vorzugsweise in diesem Temperaturbereich 1500 - 50000 mPa•s. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche ablaufen kann, bevor er sich aufgrund des Abkühlens verfestigt. Insbesondere liegt die Viskosität, bestimmt nach Brookfield Thermosel, im Temperaturbereich von 150 bis 180 °C bevorzugt im Bereich von 2500 - 20000 mPa•s.

Das in Folge des Abkühlens erfolgende Erstarren und Verfestigen des Klebstoffes bewirkt einen schnellen Festigkeitsaufbau und eine hohe Anfangshaftfestigkeit des Klebverbundes. Daher ist bei der Verarbeitung eines Klebstoffes darauf zu achten, dass das Verkleben innerhalb der Zeit erfolgt, in der der Klebstoff noch nicht zu stark abgekühlt ist, d.h. das Verkleben muss erfolgen, so lange der Klebstoff noch flüssig, bzw. zumindest noch klebrig und verformbar, ist.

Es hat sich gezeigt, dass die beschriebenen erfindungsgemässen Schmelzklebstoff-Zusammensetzungen eine hohe Anfangsfestigkeit aufweisen und in einem weiten Temperaturbereich über hohe Festigkeiten und Flexibilitäten sowie über eine sehr hohe UV-Stabilität verfügen.

Die beschriebenen erfindungsgemässen Schmelzklebstoff-Zusammensetzungen sind durch die Vermeidung von Isocyanaten aus Gründen der Arbeitshygiene und Arbeitssicherheit besonders vorteilhaft.

Zudem wurde gefunden, dass durch das bei 25 °C flüssige Polyolefin-Harz **PH**, im Vergleich zu Weichharzen eine verbesserte UV-Beständigkeit erzielt wird.

Die erfindungsgemäßen Schmelzklebstoffzusammensetzungen weisen ein äusserst günstiges Haftspektrum auf unpolaren Kunststoffen, wie Polyethylen oder Polypropylen, auf, und erlauben so ein Verkleben auch ohne vorheriges Aufbringen eines Primers.

Es hat sich zudem gezeigt, dass die beschriebenen Schmelzklebstoff-Zusammensetzungen sehr lagerstabil sind, über gute Verarbeitungseigenschaften, insbesondere im Applikationstemperaturbereich von 150 bis 200 °C, verfügen und bei diesen Temperaturen auch über längere Zeit viskositätsstabil sind. Die Aushärtung erfolgt geruchsfrei, schnell und auch bei dickschichtigen Anwendungen ohne Blasen. Die Schmelzklebstoff-Zusammensetzung besitzt eine gute Haftung, insbesondere eine starke Soforthaftung und Klebrigkeit, und eine gute Beständigkeit gegenüber UV-Licht, Umwelteinflüssen, insbesondere gegenüber wässrigen Medien wie beispielsweise Tensiden, schwache Säuren und Laugen, und ist nicht korrosiv.

Weiter sind die beschriebenen erfindungsgemässen Schmelzklebstoff-Zusammensetzungen durch ihre Alterungs- und Wärmebeständigkeit besonders vorteilhaft.

Die vorgängig beschriebenen Schmelzklebstoff-Zusammensetzungen können vielseitig eingesetzt werden, typischerweise in der Bau- und der Hygieneindustrie.

Es hat sich gezeigt, dass die vorgängig beschriebenen Schmelzklebstoff-Zusammensetzungen bestens zum Verkleben von Polyolefin-Materialien mit Schäumen, Faserwerkstoffen oder Folien sowie zur Herstellung einer mehrschichtigen Kunststoffbahn verwendet werden können.

Weiterhin sind die Schmelzklebstoff-Zusammensetzungen auch sehr gut geeignet, um Sandwich-Panels zu kleben.

Ein weiterer Aspekt der Erfindung betrifft einen Verbundkörper, aufweisend ein erstes Substrat **S1**, welches bevorzugt eine Polyolefin-Folie ist, eine vorgängig beschriebene Schmelzklebstoff-Zusammensetzung, sowie ein zweites Substrat **S2**, welches bevorzugt ein Polyolefin-Schaumstoff oder ein Polyolefin-Faserwerkstoff ist, wobei die Schmelzklebstoff-Zusammensetzung zwischen erstem Substrat **S1** und zweitem Substrat **S2** angeordnet ist.

Als "Polyolefin-Folie" werden insbesondere biegsame flächige Polyolefine in einer Dicke von 0,05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Besonders bevorzugt weisen die Polyolefin-Folien eine Dicke von 0.5 - 2 mm, am meisten bevorzugt eine Dicke von 0.7 - 1.5 mm auf. Derartige Polyolefin-Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass Polyolefin-Folien auch noch andere Zusatzstoffe und Verarbeitungsmittel, wie Füllstoffe, Hitzestabilisatoren, Weichmacher, Gleitmittel, Biozide, Flammschutzmittel, Antioxidantien, Pigmente, wie z. B. Titandioxid oder Russ, und Farbstoffe enthalten können. Das heisst, es werden auch derartige Folien als Polyolefin-Folien bezeichnet, welche nicht zu 100 % aus Polyolefinen bestehen.

Der Begriff "Polyolefin-Folie" umfasst im Rahmen der vorliegenden Erfindung nicht nur Basismaterialien (d.h. Polymere in der Polyolefin-Folie; diese kann zusätzlich z.B. Füllstoffe enthalten, die nicht dem "Basismaterial" zuzurechnen sind), die ausschließlich aus α-Olefin- Monomeren aufgebaut sind, sondern erfasst auch Materialien, die neben α-Olefinmonomeren auch andere Monomere enthalten. Solche zusätzlichen Monomere können beispielsweise in Form von Vinylcarboxylatestern wie Vinylacetat oder Vinylpropionat oder (Meth)acylatestern wie Ethyl(meth)acrylat oder Propyl(meth)acylat vorliegen. Als besonders geeignetes Comonomer für solche Materialen hat sich Vinylacetat erwiesen, das, bevorzugt in Kombination mit Ethylen (unter Bindung von EVA-Copolymeren), ein vorteilhaftes Basismaterial für Polyolefin-Folien bildet.

Enhält das Basismaterial der "Polyolefin-Folie" ein Comonomer, das selbst kein α-Olefin ist, so es es dennoch bevorzugt, wenn der Massenanteil der nicht-α-Olefin Monomere geringer ist als der der α-Olefin Monomere. Besonders bevorzugte Massenanteile von nicht-α-Olefin Monomeren im Basismaterial der Polyolefin-Folie können mit bis zu 30 Gew.-% und insbesondere 5 bis 20 Gew.-% angegeben werden.

Das zweite Substrat **S2**, vielfach auch als Träger bezeichnet, kann von verschiedener Art und Natur sein. Die Substrate können beispielsweise aus Kunststoffen, insbesondere Polyolefinen oder ABS, Metall, lackiertem Metall, aus Kunststoff, Holz, Holzwerkstoffen oder Fasermaterialien sein. Das Substrat ist vorzugsweise ein fester, geformter Körper.

Insbesondere handelt es sich beim ersten Substrat **S1** um eine Polyolefin-Folie und beim zweiten Substrat **S2** um ein poröses Material, insbesondere einen Polyolefin-Schaumstoff oder einen Polyolefin-Faserwerkstoff.

Bei Bedarf kann die Oberfläche des zweiten Substrates **S2** vorbehandelt sein. Insbesondere kann eine derartige Vorbehandlung ein Reinigen oder ein Auftragen eines Primers darstellen. Bevorzugt ist jedoch das Aufbringen von Primern nicht erforderlich.

Der beschriebene Verbundkörper ist vorzugsweise ein Artikel der industriellen Fertigung, insbesondere ein Artikel zur Abdichtung von Untergründen oder Bauten gegen Wasserdurchstoss in der Baubranche wie beispielsweise wasserdichte Membranen.

Insbesondere bevorzugt ist der beschriebene Verbundkörper eine wasserdichte Membran, wobei es sich beim ersten Substrat **S1** um eine Polyolefin-Folie und beim zweiten Substrat **S2** um ein poröses Material, insbesondere einen Schaumstoff oder einen Faserwerkstoff handelt.

Im verbauten Zustand ist also bei einem solchen Verbundkörper typischerweise an der vom ersten Substrat **S1** abgewandten Seite des zweiten Substrats **S2** Beton angeordnet.

Falls es sich bei dem Verbundkörper um eine wasserdichte Membran handelt, weist das erste Substrat **S1** typischerweise eine hohe Beständigkeit gegen Wasserdruck auf und zeigt gute Werte in Weiterreissversuchen und Perforationsversuchen, was besonders bei mechanischen Belastungen auf Baustellen von Vorteil ist.

Eine poröse Struktur des zweiten Substrats **S2** ist der Elastizität der wasserdichten Membran zuträglich, sie kann dadurch besser Zug- und Scherkräfte aushalten. Andererseits führt sie zu einer guten Aufnahme von flüssigem Beton und somit zu einem guten Verbund mit dem flüssigen sowie dem ausgehärteten Beton. Dies kann insbesondere bei grossen Flächenneigungswinkeln von Vorteil sein, damit der Beton nicht auf dem zweiten Substrat **S2** abrutscht.

Vorzugsweise ist das zweite Substrat **S2** ein Faserwerkstoff. Unter Faserwerkstoff ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/ oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der Faserwerkstoff Zwischenräume. Diese Zwischenräume werden durch geeignete Herstellverfahren aufgebaut. Vorzugsweise sind die Zwischenräume zumindest teilweise offen und erlauben das Eindringen von flüssigem Beton und/ oder von der vorhergehend genannten Schmelzklebstoff-Zusammensetzung.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind.

Der Faserwerkstoff kann ein lockereres Material aus Spinnfasern oder Filamenten sein, deren Zusammenhalt im Allgemeinen durch die den Fasern eigene Haftung gegeben ist. Hierbei können die Einzelfasern eine Vorzugsrichtung aufweisen oder ungerichtet sein. Der aus Fasern aufgebaute Körper kann mechanisch verfestigt werden durch Vernadeln, Vermaschen oder durch Verwirbeln mittels scharfer Wasserstrahlen. Besonders bevorzugt als Faserwerkstoff ist ein Filz oder Vlies. Weiter bevorzugt sind Faserwerkstoffe, die eine Maschenzahl (oder Meshzahl) von 5 - 30 pro 10 cm aufweisen. Solche Schichten aus Faserwerkstoffen bieten dieselben Vorteile wie sie vorgehend für die porösen Materialien erwähnt wurden und haben geringe Herstellkosten. Weiter können Faserwerkstoffe in der Regel sehr gleichmässig hergestellt werden, wodurch eine vergleichbare Durchdringung mit Beton erreicht werden kann.

Vorteilhafterweise besteht das zweite Substrat **S2** aus einem thermoplastischen Material und das Material ist ausgewählt aus der Gruppe umfassend Polyethylen mit hoher Dichte (HDPE), Polyethylenterephthalat (PET), Polystyrol (PS), Polypropylen (PP), Polyvinylchlorid (PVC), Polyamid (PA) und Kombinationen davon.

Falls es sich bei dem Verbundkörper um eine wasserdichte Membran handelt, weist das zweite Substrat **S2** typischerweise eine Dicke von 0,1 - 1 mm, bevorzugt von 0,2 - 0,6 mm, insbesondere bevorzugt von 0,4 - 0,55 mm auf.

Die Schmelzklebstoff-Zusammensetzung ist zwischen erstem Substrat **S1** und dem zweiten Substrat **S2** angeordnet. Es kann jedoch auch von Vorteil sein, wenn die Schmelzklebstoff-Zusammensetzung teilweise oder vollständig, bevorzugt teilweise in das Substrat **S2** eindringt, woraus sich ein besserer Verbund mit der Schmelzklebstoff-Zusammensetzung ergibt.

Weiter kann es bei einem solchen Verbundkörper im verbauten Zustand für die Verbindung der wasserdichten Membran mit dem Beton vorteilhaft sein, wenn der Beton zumindest teilweise in Kontakt mit der Schmelzklebstoff-Zusammensetzung ist. Dies kann dadurch geschehen, dass der Beton das poröse Material durchsetzt und somit in Kontakt mit der Schmelzklebstoff-Zusammensetzung gelangt und/ oder dass die Schmelzklebstoff-Zusammensetzung das poröse Material durchsetzt und somit in Kontakt mit dem Beton gelangt.

Vorgehend genannte wasserdichte Membranen, umfassend die erfindungsgemässe Schmelzklebstoff-Zusammensetzung, sowie die Verwendung der erfindungsgemässen Schmelzklebstoff-Zusammensetzung in ebensolchen ist dahingehend vorteilhaft, dass einerseits die Schmelzklebstoff-Zusammensetzung die Verwendung von schwer zu verklebenden Polyolefin-Folien erlaubt, welche aufgrund ihrer hohe Beständigkeit gegen Wasserdruck äusserst vorteilhaft sind und sich durch eine hohe Beständigkeit gegenüber UV auszeichnen. Andererseits gewährleistet die Schmelzklebstoff-Zusammensetzung aufgrund ihrer Hydrophobizität und Widerstandsfähigkeit gegenüber Flüssigkeiten, der nicht-korrosiven Eigenschaften und der guten Haftungseigenschaften einen guten Verbund von erstem Substrat **S1** und zweitem Substrat **S2**. Dies verhindert beispielsweise Zwischenräume zwischen erstem Substrat **S1** und zweitem Substrat **S2** und erschwert das Hinterlaufen der wasserdichten Membran im Falle eines Lecks.

### Beispiele

**Tabelle 1. Charakterisierung der verwendeten Rohstoffe und deren Bezeichnung**

| | |
|---|---|
| ***P*** | Poly-α-olefin, Propen-reich |
| | Molekulargewicht (Mₙ): zwischen 17000 und 20000 g/mol |
| | Schmelzviskosität (190 °C DIN 53 019): ca. 50000 mPa•s |
| | Erweichungspunkt (Ring & Kugel, DIN EN 1238): 100 °C |
| | Dichte: ca. 0.85 g/cm³ |
| ***PH*** | Polyisobutylen (Mₙ 930 - 970 g/mol, "pour point" (ASTM D97): -1 °C) |
| ***PW*** | Maleinsäureanhydridgepfropftes Polypropylen (durch Metallocen-Katalyse erhalten) |
| | Schmelzviskosität (170 °C DIN 53 018): ca. 800 mPa•s |
| | Dichte: ca. 0,91 g/cm³ |
| | Tropfpunkt: ca. 156 °C |
| ***Stab.*** | Phenolischer Wärmestabilisator |

### Herstellung Testmembranen

Auf eine TPO-Membran einer Dicke von 1,2 mm (von Sika Schweiz) wurde ein Klebstoff mit 47,5 Gew.-% **P**, 47,5 Gew.-% **PH**, 4,75 Gew.-% **PW** und 0,25 Gew.-% Stabilisator mit einer Auftragsdicke von 200 g/m² aufgetragen. Auf den Klebstoffauftrag wurde anschliessend ein Vlies (Dicke von 0,5 mm, aus PP, Hersteller Polyvlies Frankreich, Produktname SC 61055001) einkaschiert.

Zum Vergleich wurde eine entsprechende Membran hergestellt, bei der das Polyolefin-Harz im Klebstoff durch ein Weichharz (Wingtack 10) ersetzt wurde ("Membran mit Zusammensetzung des Standes der Technik").

### Probenvorbereitung

Die Probenvorbereitung erfolgte nach den Maßgaben der ASTM 285.

### Haftzugfestigkeit

Die Ermittlung der Haftzugfestigkeit erfolgte in Anlehnung an die ISO 4624. Zur Herstellung der Prüfkörper wurde zunächst Beton an die Testmembranen angegossen und für 48 h abgebunden. Auf die Membranseite wurde anschließend ein Stempel (Durchmesser 50 mm) aufgeklebt und die Membran um den Stempel herum vom Beton entfernt. Die für den Abzug des Stempels (mit der Membran) vom Beton erforderliche Kraft wurde dann mit einer Zugprüfmaschine bestimmt.

### Schälzugfestigkeit

Bei den hergestellten Probenkörpern wurde nach 48 Stunden Lagerung bei 25 °C (nach Betonierung der Membran und Abbinden des Betons für 48 h) die Schälzugfestigkeit mit Hilfe einer Zugprüfmaschine mit folgenden Parametern bestimmt: Winkel von 90 °C, Vorschubgeschwindigkeit: 100 mm/min, Membranbreite: 50 mm, Temperatur/Luftfeuchtigkeit: 25 °C/ 50% rLF.

### Dichtigkeitsprüfung

Mit den wie oben beschrieben hergestellten Membranen wurden Dichtigkeitsprüfungen gemäss den Maßgaben der ASTM D 5385 durchgeführt. Zur Prüfung wird die Probe in einer Vorrichtung nach ASTM D 5385 eingespannt und auf der Prüffläche mit Wasserdruck belastet. Damit wird die flächige Hinterlaufsicherheit der Membran (Probe mit vorgestanztem Loch) oder die Dichtigkeit einer Überlappungsverklebung überprüft. Die Prüfung erfolgte jeweils über drei Druckstufen mit einem Prüfdruck von 1 bar für 4 Stunden in der ersten Stufe, einem Prüfdruck von 3 bar für 20 Stunden in der zweiten Stufe sowie einem Prüfdruck von 5 bar für 6 Tage in der dritten Stufe.

Nach Abschluss der Prüfung konnte für die Membran festgestellt werden, ob die Papiere in den Prüföffnungen trocken sind und falls nicht, wieweit (in cm) das Wasser vordringen konnte. Ist der Wert ≤ 2 cm ist der Test als bestanden zu werten.

### Bewitterungstests

Die Dichtigkeitsprüfung wurde mit bewitterten Testmembranen wiederholt, die in einem 45°-Winkel nach Süden orientiert in Dubai für 8 Wochen im Freien der Sonnenbestrahlung ausgesetzt waren. Bei den bewitterten Testmembranen gemäss der vorliegenden Erfindung wurden Werte ≤ 2 cm erhalten, bei den Membranen aus dem Stand der Technik dagegen Werte von > 2 cm (siehe Tabelle 2). Die Untersuchungen zeigen demzufolge, dass die mit den erfindungsgemäßen Schmelzklebstoff-Zusammensetzungen hergestellten Membranen eine signifikant verbesserte UV-Beständigkeit im Vergleich zu den Membranen aus dem Stand der Technik aufweisen.

**Tabelle 2. Charakterisierung der verwendeten Membranen hinsichtlich lateraler Wassermigration und Anhaftung an den Beton vor und nach Bewitterung in Dubai für 8 Wochen.**

| | | Laterale Migrationsfähigkeit des Wassers gemäß ASTM 5385 D | | | Anhaftung an den Beton | |
|---|---|---|---|---|---|---|
| | | Bedingungen: 7 Tage/ 5 bar | | | | |
| | | Probe der Oberfläche | | | Schälzugfestigkeit | Haftzugfestigkeit |
| | Einbettung | Links | Mitte | Rechts | [N/ 50mm] | [N/ mm²] |
| Vor Bewitterung | Membran mit erfindungsgemäßer Zusammensetzung | 0 cm | 0 cm | 2 cm | 20 | 0,27 |
| Nach Bewitterung | | ≤ 2 cm | ≤ 2 cm | ≤ 2 cm | Keine Daten | Keine Daten |
| Vor Bewitterung | Membran mit Zusammensetzung des Standes der Technik | 0 cm | 0 cm | 0 cm | 50-80 | 0,56 |
| Nach Bewitterung | | > 2 cm | > 2 cm | > 2 cm | Keine Daten | Keine Daten |

In einem weiteren Experiment wurden Prüfstreifen (50 x 135 mm) einer mit einem PE/PP-Vlies und dem erfindungsgemäßen bzw. dem Klebstoff nach dem Stand der Technik (siehe oben) beschichteten TPO-Membran mit einer Dicke von 1,2 mm flach auf den Boden einer Prüfkammer gelegt, wobei die Vliesseite der Streifen nach oben zeigte. Diese Prüfstreifen wurden für eine Zeitraum von 0, 1, 2 und 4 Wochen mit einem SOL 500S Strahler bei einem Transmissionsbereich von 295 bis 3000nm und einer Bestrahlungsintensität von 1000 W/m² bestrahlt. Anschließend wurde die Degradation von Vlies, Klebstoff und Membran, das Schrumpfverhalten des Vlieses und der Verlust an Klebrigkeit visuell und haptisch beurteilt. Die Ergebnisse dieser Untersuchungen sind in der folgenden Tabelle 3 wiedergegeben.

**Tabelle 3. Beurteilung der Stand der Technik und erfindungsgemäßen Membranen nach UV-Bestrahlung für unterschiedliche Zeiträume**

| Probe | | Membran mit erfindungsgemäßer Zusammensetzung | Membran mit Zusammensetzung des Standes der Technik |
|---|---|---|---|
| Bestrahlung für | | | |
| | 0 Wochen | Klebrig, wenig Faserausriss, Vließ nicht geschädigt | Klebrig, kein Faserausriss, Vlies geschädigt |
| | 1 Woche | Klebrig, kein Faserausriss | Nicht klebrig, Faserausriss, Vlies geschädigt |
| | 2 Wochen | Membran klebrig, Vlies klebrig, kaum Faserausriss, Vlies leicht geschädigt | Nicht klebrig mit Faser- und Vliesriss, das Vlies ist stark UV- geschädigt |
| | 4 Wochen | Membran klebrig, Vlies klebrig, kaum Faserausriss, Vlies ist UV-geschädigt | Nicht klebrig mit Faserausriss und Vliesriss, das Vlies ist stark UV-geschädigt |

Die Ergebnisse der Bestrahlungsuntersuchungen zeigen, dass die Klebstoffzusammensetzungen gemäß dem Stand der Technik bereits nach relativ kurzer Bestrahlungszeit signifikant an Klebrigkeit verlieren. Die erfindungsgemäßen Klebstoffzusammensetzungen bleiben hingegen auch über 4 Wochen Bestrahlungszeit hinreichend klebrig, so dass sie noch verarbeitet werden können.

## Patentansprüche

1. Schmelzklebstoff-Zusammensetzung umfassend:
**a)** mindestens ein bei 25 °C festes Polyolefin-Polymer **P**,
**b)** mindestens ein bei 25 °C flüssiges Polyolefin-Harz **PH**, und gegebenenfalls
**c)** mindestens ein Polyolefin-Wachs **PW**.

2. Schmelzklebstoff-Zusammensetzung gemäß Anspruch 1, **dadurch gekennzeichnet, dass** das Polyolefin-Polymer **P** ein thermoplastisches Poly-α-Olefin, bevorzugt ein ataktisches Poly-α-Olefin (APAO) und besonders bevorzugt ein Propen-reiches Poly-α-Olefin ist.

3. Schmelzklebstoff-Zusammensetzung gemäß Anspruch 1 oder 2, **dadurch gekennzeichnet, dass** das Polyolefin-Polymer **P** einen Erweichungspunkt gemessen nach der Ring & Kugel-Methode gemäß DIN EN 1238, zwischen 70 °C und 170 °C, bevorzugt zwischen 80 °C und 120 °C und besonders bevorzugt zwischen 90 °C und 110 °C, aufweist.

4. Schmelzklebstoff-Zusammensetzung gemäß einem der vorhergehenden Ansprüche, **dadurch gekennzeichnet, dass** die Menge des mindestens einen bei 25 °C festen Polyolefin-Polymers **P** 10 bis 60 Gew.-%, bevorzugt 30 bis 55 Gew.-% und besonders bevorzugt 40 bis 50 Gew.-%, bezogen auf die Schmelzklebstoff-Zusammensetzung, beträgt.

5. Schmelzklebstoff-Zusammensetzung gemäß einem der vorhergehenden Ansprüche, **dadurch gekennzeichnet, dass** das mindestens eine bei 25 °C flüssige Polyolefin-Harz **PH** ein Polyisobutylen-Harz ist.

6. Schmelzklebstoff-Zusammensetzung gemäß einem der vorhergehenden Ansprüche, **dadurch gekennzeichnet, dass** die Menge des mindestens einen Polyolefin-Harz **PH** mindestens 30 Gew.-%, bevorzugt 30 bis 60 Gew.-% und besonders bevorzugt 40 bis 50 Gew.-%, bezogen auf die Schmelzklebstoff-Zusammensetzung, beträgt.

7. Schmelzklebstoff-Zusammensetzung gemäß einem der vorhergehenden Ansprüche, **dadurch gekennzeichnet, dass** das mindestens eine Polyolefin-Wachs **PW** ein Maleinsäureanhydrid-gepfropftes Polyolefin-Wachs und bevorzugt ein Maleinsäureanhydrid-gepfropftes Polypropylen- oder Polyethylen-Wachs ist.

8. Schmelzklebstoff-Zusammensetzung gemäß einem der vorhergehenden Ansprüche, **dadurch gekennzeichnet, dass** die Menge des mindestens einen Polyolefin-Wachses **PW** mehr als 1 Gew.-%, bevorzugt 1 bis 20 Gew.-%, besonders bevorzugt 3 bis 10 Gew.-% und ganz besonders bevorzugt etwa 5 Gew.-%, bezogen auf die Schmelzklebstoff-Zusammensetzung, beträgt.

9. Schmelzklebstoff-Zusammensetzung gemäß einem der vorhergehenden Ansprüche, **dadurch gekennzeichnet, dass** sie weiterhin mindestens ein thermoplastisches Polymer, das kein Polyolefin-Polymer ist, enthält, das bevorzugt in Form von Ethylenvinylacetat (EVA), oder Polypropylenen und Polyethylenen in gepfropfter bzw. nicht gepfropfter Form vorliegt.

10. Schmelzklebstoff-Zusammensetzung gemäß einem der vorhergehenden Ansprüche, **dadurch gekennzeichnet, dass** die Zusammensetzung frei von Weichharzen mit einem Erweichungspunkt, gemessen nach der Ring & Kugel Methode gemäß DIN EN 1238, im Bereich von -10 bis 40 °C, ist.

11. Schmelzklebstoff-Zusammensetzung gemäß einem der vorhergehenden Ansprüche, **dadurch gekennzeichnet, dass** sie weitere Additive ausgewählt aus der Gruppe bestehend aus Füllstoffen, Weichmachern, Haftvermittlern,
UV-Absorptionsmitteln, UV- und Wärmestabilisatoren, optische Aufheller, Pigmente, Farbstoffe und Trocknungsmittel, oder Gemischen davon, enthält.

12. Verwendung der Schmelzklebstoff-Zusammensetzung gemäß einem der
vorhergehenden Ansprüche 1 bis 11 zur Herstellung einer mehrschichtigen Kunststoffbahn, zum Verkleben von Polyolefin-Materialien mit Schäumen, Faserwerkstoffen oder Folien.

13. Verbundkörper aufweisend
- ein erstes Substrat **S1**, welches eine Polyolefin-Folie ist;
- eine Schmelzklebstoff-Zusammensetzung gemäß den vorhergehenden Ansprüchen 1 bis 11, sowie
- ein zweites Substrat **S2**, welches bevorzugt ein Polyolefin-Schaumstoff oder ein Polyolefin-Faserwerkstoff ist,
wobei die Schmelzklebstoff-Zusammensetzung zwischen dem ersten Substrat **S1** und dem zweiten Substrat **S2** angeordnet ist.

14. Verbundkörper gemäß Anspruch **13**, **dadurch gekennzeichnet, dass** an der vom ersten Substrat **S1** abgewandten Seite des zweiten Substrats **S2** Beton angeordnet ist.

15. Verbundkörper gemäß Anspruch 13 oder 14, **dadurch gekennzeichnet, dass** es sich bei dem zweiten Substrat **S2** um ein poröses Material handelt und dass der Beton zumindest teilweise in Kontakt mit der Schmelzklebstoff-Zusammensetzung ist.
